Europäisches Patentamt

European Patent Office

Office européen des brevets

(11) Veröffentlichungsnummer: **0 302 448**
**A2**

# EUROPÄISCHE PATENTANMELDUNG

(21) Anmeldenummer: 88112544.7

(22) Anmeldetag: 02.08.88

(51) Int. Cl.4 **B01D 35/18 , D06F 43/00 , B01D 36/00**

(30) Priorität: 13.07.88 DE 3823652
04.08.87 DE 3725761

(43) Veröffentlichungstag der Anmeldung:
08.02.89 Patentblatt 89/06

(84) Benannte Vertragsstaaten:
AT CH DE FR GB IT LI NL

(71) Anmelder: **Seitz Enzinger Noll Maschinenbau Aktiengesellschaft**
**Neckarauer Strasse 140-162 Postfach 645**
**D-6800 Mannheim 1(DE)**

(72) Erfinder: **Kaiser, Klaus**
**Rheinhessenstrasse 12**
**D-6551 Neu-Bamberg(DE)**

(54) Verfahren zum Reinigen von Lösungsmitteln sowie Filtereinrichtung zum Durchführen dieses Verfahrens.

(57) Bei einem Verfahren bzw. bei einer Filtereinrichtung zum Reinigen von Lösungsmitteln werden im Lösungsmittel vorhandene Fremdstoffe in der Filtereinrichtung durch Filtration unter Verwendung wenigstens eines Filters ausgeschieden, welches vom Lösungsmittel durchströmt wird und auf welchem sich die Fremdstoffe als Filterkuchen niederschlagen. Zumindest vor dem Austrag der den Filterkuchen bildenden Fremdstoffe aus der Filtereinrichtung werden im Filterkuchen sowie eventuell auch im Filter vorhandene Lösungsmittelrückstände durch Destillation zurückgewonnen, bei der die Lösungsmittelrückstände in der Filtereinrichtung durch Beaufschlagung mit einem heißen gasförmigen Medium verdampft werden, das entgegen der Filtrationsrichtung, also zuerst durch das Filter und erst dann durch den Filterkuchen bzw. die Fremdstoffe geleitet wird.

EP 0 302 448 A2

# Verfahren zum Reinigen von Lösungsmitteln sowie Filtereinrichtung zum Durchführen dieses Verfahrens

Die Erfindung bezieht sich auf ein Verfahren zum Reinigen von Lösungsmitteln entsprechend Oberbegriff Patentanspruch 1. Weiterhin bezieht sich die Erfindung auf eine Filtereinrichtung zum Durchführen dieses Verfahrens entsprechend Oberbegriff Patentanspruch 4.

In den unterschiedlichsten technischen Anlagen und Systemen werden flüssige Lösungsmittel für die unterschiedlichsten Zwecke verwendet, wobei in der Regel das im Verfahren befindliche Lösungsmittel verschmutzt bzw. mit Fremdstoffen beaufschlagt wird, die dann zur Reinigung des Lösungsmittels in einer Filtereinrichtung unter Verwendung wenigstens eines Filters ausgefiltert werden müssen.

Ein Beispiel für solche Anlagen sind Reinigungsanlagen, die zum chemischen Reinigen von Gegenständen, beispielsweise zum Reinigen von Bekleidung oder anderen Gegenständen aus Textilien verwendet werden und bei denen das als Reinigungsmittel verwendete, den Schmutz lösende Lösungsmittel in einer Filtereinrichtung zur Aufbereitung für einen weiteren Reinigungsvorgang gefiltert bzw. gereinigt werden muß.

Derartige Filtereinrichtungen erfordern aber, daß sie selbst zumindest von Zeit zu Zeit gereinigt werden, d.h. die sich als Filterkuchen auf dem Filter abscheidenden Fremdstoffe entfernt bzw. ausgebracht werden, was vielfach auch durch Austausch des Filters erfolgt. Da der auf dem Filter abgeschiedene Filterkuchen, aber auch der Filter selbst einen hohen Anteil an Lösungsmittelrückständen aufweist, ist die Beseitigung der Filter und der Filterrückstände (als Filterkuchen abgeschiedene Fremdstoffe) aus gesundheitlichen Gesichtspunkten sowie aus Gesichtspunkten des Umweltschutzes äußerst problematisch, und zwar sowohl in bezug auf die Handhabung dieser Stoffe bei der Reinigung der Filtereinrichtung, als auch in bezug auf die endgültige Lagerung bzw. Beseitigung dieser Stoffe.

Bei einer Reinigungsanlage zum chemischen Reinigen von Gegenständen (z.B. Bekleidung oder andere Gegenstände aus Textilien), die (Reinigungsanlage) einen an einen Behandlungsraum für die Gegenstände anschließbaren, eine Filtereinrichtung einschließenden Lösungsmittelkreislauf sowie einen an den Behandlungsraum anschließenden Warmluftkreislauf aufweist, welcher eine Luftfördereinrichtung, einen Lufterhitzer sowie einen Luftkühler besitzt und zum Entfernen von Lösungsmittelrückständen aus den Gegenständen nach ihrer Behandlung (Reinigung) dient, ist bekannt (DE-PS 31 50 015), während der Behandlung der Gegenstände im Warmluftkreislauf einen Teil der Luft dieses Warmluftkreislaufes auch durch die Filtereinrichtung zu leiten, um dort im Filter bzw. im Filterkuchen vorhandene Lösungsmittelrückstände zu verdampfen, die dann am Luftkühler dieses Warmluftstromkreises kondensiert und ausgeschieden werden. Nachteilig ist bei dieser bekannten Reinigungsanlage u.a., daß die verdampften und mit der Luft aus der Filtereinrichtung mitgeführten Lösungsmittelrückstände in die Behandlungskammer gelangen und somit die dort vorhandenen Gegenstände (z.B. Bekleidung oder andere Gegenstände aus Textilien) zusätzlich mit verdampftem Lösungsmittel beaufschlagt werden. Nachteilig ist bei dieser bekannten Reinigungsanlage aber vor allem auch, daß die vom Warmluftstromkreis abgezweigte warme Luft den Filter in der Filtereinrichtung in der gleichen Richtung durchströmt, in der dieser Filter auch vom Lösungsmittel durchströmt wurde. Dies führt dazu, daß der auf dem Filter abgeschiedene Filterkuchen durch die warme Luft komprimiert bzw. zusammengedrückt wird, sich vorhandene Kanäle im Filterkuchen sowie im Filter dadurch verschließen, somit ein gleichmäßiges Durchströmen des Filterkuchens sowie des Filters und ein schnelles sowie vor allem vollständiges Entfernen von Lösungsmittelrückständen im Filter und im Filterkuchen nicht möglich ist. Nachteilig ist auch, daß für die Rückgewinnung von Lösungsmittelrückständen im Filter sowie im Filterkuchen Betriebsstufen der Reinigungsanlage verwendet werden, die an sich für einen anderen Zweck, nämlich zum Entfernen von Lösungsmittelrückständen aus den zu behandelnden bzw. zu reinigenden Gegenstände vorgesehen sind und die demnach nicht optimal speziell an die für die Rückgewinnung von Lösungsmittelrückständen aus dem Filter bzw. Filterkuchen notwendigen Bedingungen angepaßt sind. Dies gilt unter anderem für die Temperatur des Warmluftstromes, die schon aus Gründen einer schonenden Behandlung von Gegenständen z.B. aus empfindlichen Textilien nicht beliebig hoch bzw. so gewählt werden kann, daß diese Temperatur für eine optimale und vollständige Rückgewinnung der Lösungsmittelrückstände im Filter bzw. im Filterkuchen insbesondere auch in kurzer Zeit ausreicht.

Bekannt ist weiterhin (DE-OS 35 12 361), in der Filtereinrichtung einer Reinigungsanlage zum Reinigen von Bekleidung oder anderen Gegenständen aus Textilien eine Heizeinrichtung zum Aufheizen des Filters sowie des auf diesem Filter abgeschiedenen Filterkuchens vorzusehen, wobei mit dieser Heizeinrichtung Lösungsmittelrückstände im Filter sowie im Filterkuchen verdampft und in dieser verdampften Form abgesaugt werden können. Auch in diesem bekannten Fall besteht der Nachteil, daß der auf dem Filter abgeschiedene Filterkuchen komprimiert sowie in diesem Filterkuchen und im Filter vorhandene Kanäle verschlossen werden, da das Absaugen der verdampften Lösungsmittelrückstände in der gleichen Richtung erfolgt, in der der Filter zuvor von dem Lösungsmittel des Lösungsmittelkreislaufs durchströmt wurde. Weiterhin sind in diesem bekannten Fall erhebliche Temperaturdifferenzen im Filterkuchen unvermeidlich, die einerseits dazu führen können, daß den Filterkuchen bildende Fremdstoffe in heißeren Bereichen des Filterkuchens zusammenbacken bzw. mit dem Filter eine nur schwer lösbare Verbindung eingehen, oder daß insbesondere dann, wenn die den Filterkuchen bildenden Fremdstoffe schmelzklebrige Bestandteile enthalten, sich dort, wo niedrigere Temperaturen herrschen bzw. wo beim Absaugen der verdampften Lösungsmittelrückstände kühlere Luft nachströmt, Kanäle im Filter kuchen bzw. im Filter verschließende Bereiche ausbilden, die dann ebenfalls ein gleichmäßiges Durchströmen des Filterkuchens bzw. des Filters mit der beim Absaugen der verdampften Lösungsmittelrückstände nachströmenden Luft und damit ein vollständiges Entfernen der Lösungsmittelrückstände unmöglich machen. Sofern es sich bei dem Lösungsmittel um eine leicht entflammbare Substanz handelt, ist die in der Filtereinrichtung vorgesehene Heizvorrichtung auch aus Gründen der Betriebssicherheit sehr problematisch.

Aufgabe der Erfindung ist es, ein Verfahren sowie eine Filtereinrichtung aufzuzeigen, welche diesen Nachteil vermeiden und es ermöglichen, Lösungsmittelrückstände sicher und zuverlässig noch innerhalb der betreffenden Anlage aus den Fremdstoffen vor deren Entnahme aus der Filtereinrichtung und deren Lagerung und Beseitigung zu entfernen.

Zur Lösung dieser Aufgabe sind ein Verfahren entsprechend dem kennzeichnenden Teil des Patentanspruches 1 sowie eine Filtereinrichtung entsprechend dem kennzeichnenden Teil des Patentanspruches 4 ausgebildet.

Bei einer Ausführungsform der Erfindung werden die die Lösungsmittelrückstände enthaltenden Fremdstoffe bzw. der von diesen Fremdstoffen gebildete Filterkuchen mit dem heißen gasförmigen Medium (bevorzugt Warm- oder Heißluft) innerhalb des Teils der Filtereinrichtung beaufschlagt, der auch zum Filtern des Lösungsmittels dient. Bei dieser Ausführungsform durchströmt das heiße, gasförmige Medium den Filter und damit auch den auf diesem Filter abgeschiedenen Filterkuchen in einer Strömungsrichtung, die derjenigen Strömungsrichtung entgegengesetzt ist, in welcher der Filter von dem zu reinigenden Lösungsmittel durchflossen wird, d.h. das heiße, gasförmige Medium wird so zugeführt, daß es in den filter an derjenigen Seite eintritt, die dem Filterkuchen abgewandt ist. Hierdurch wird vor allem eine Auflockerung des Filterkuchens erreicht, so daß sich in diesem dann in über die gesamte Fläche des Filters in fein verteilter Form Kanäle für den Durchtritt des heißen gasförmigen Mediums ausbilden können und somit alle Bereiche des Filters und des Filterkuchens gleichmäßig von dem gasförmigen Medium durchströmt werden. Die Lösungsmittelrückstände im gesamten Filter sowie im gesamten Filterkuchen werden somit nahezu rückstandslos durch Verdampfen entfernt. Hierbei wird dann auch vermieden, daß sich bei der Beaufschlagung mit dem heißen gasförmigen Medium die im Filter vorhandenen Kanäle zusetzen oder aber der Filterkuchen verdichtet bzw. die Fremdstoffe gegen den Filter angedrückt werden, vielmehr werden die für das Verdampfen erforderlichen Kanäle im Filterkuchen und im Filter durch das gasförmige Medium geöffnet. Dieses ist insbes. dann von großem Vorteil, wenn die auf dem Filter abgeschiedenen Fremdstoffe zumindest teilweise auch zähflüssig oder klebrig sind.

Bei einer Ausführung der Erfindung ist zusätzlich zu dem die eigentliche Filtervorrichtung bildenden Teil der Filtereinrichtung noch eine Verdampfereinrichtung vorgesehen, in die die mit den Lösungsmittelrückständen behafteten Fremdstoffe (ggf. zusammen mit dem Filter) eingebracht werden und in der dann diese Fremdstoffe zum Verdampfen der Lösungsmittelrückstände mit dem heißen gasförmigen Medium beaufschlagt werden.

Ist die Filtereinrichtung Bestandteil einer Reinigungsanlage zum chemischen Reinigen von Gegenständen (z.B. Bekleidung oder andere Gegenstände aus Textilien), die (Reinigungsanlage) einen Behandlungsraum für die Gegenstände, einen an diesen Behandlungsraum anschließbaren, die Filtereinrichtung einschließenden Lösungsmittelkreislauf sowie einen an den Behandlungsraum anschließbaren Warmluftkreislauf zum Entfernen von Lösungsmittelrückständen aus den Gegenständen nach ihrer Behandlung aufweist und bei der (Reinigungsanlage) dieser Warmluftkreislauf eine Luftfördereinrichtung, einen Luftkühler sowie einen Lufterhitzer besitzt, ist als Quelle für das heiße gasförmige Medium (zum Verdampfen von Lösungsmittelrückständen im Filter bzw. im Filterkuchen) von einem Heißluftgebläse gebildet, welches zusätzlich zu dem Lufterhitzer des Warmluftkreislaufes vorgesehen ist. Hierdurch ist es möglich, die zum Verdampfen der Lösungsmittelrückstände im Filter sowie im Filterkuchen dienende Heißluft bezüglich ihrer Fördermenge und Temperatur diesem besonderen Anwendungszweck optimal anzupassen. da die zum Erzeugen des Heißluftstromes dienenden Mittel nicht abhängig von zur Reinigung der Gegenstände notwendigen Betriebsstufen sind. Weiterhin ist es bei dieser Ausbildung auch möglich, bei einer größeren Reinigungsanlage mit mehreren Behandlungsräumen eine für mehrere Behandlungsräume gemeinsame Filtereinrichtung vorzusehen.

Weiterbildungen der Erfindung sind Gegenstand der Unteransprüche.

Die Erfindung wird im folgenden anhand der Figuren näher erläutert, es zeigen:

Fig. 1 in schematischer Darstellung den Lösungsmittelkreislauf einer Reinigungsanlage zum chemischen Reinigen von Gegenständen zusammen mit einer Filtereinrichtung zum Ausscheiden von Fremdstoffen aus dem Lösungsmittel;

Fig. 2 eine weitere Ausführungsform der Filtereinrichtung;

Fig. 3 eine ähnliche, allerdings erweiterte Darstellung wie Fig. 1.

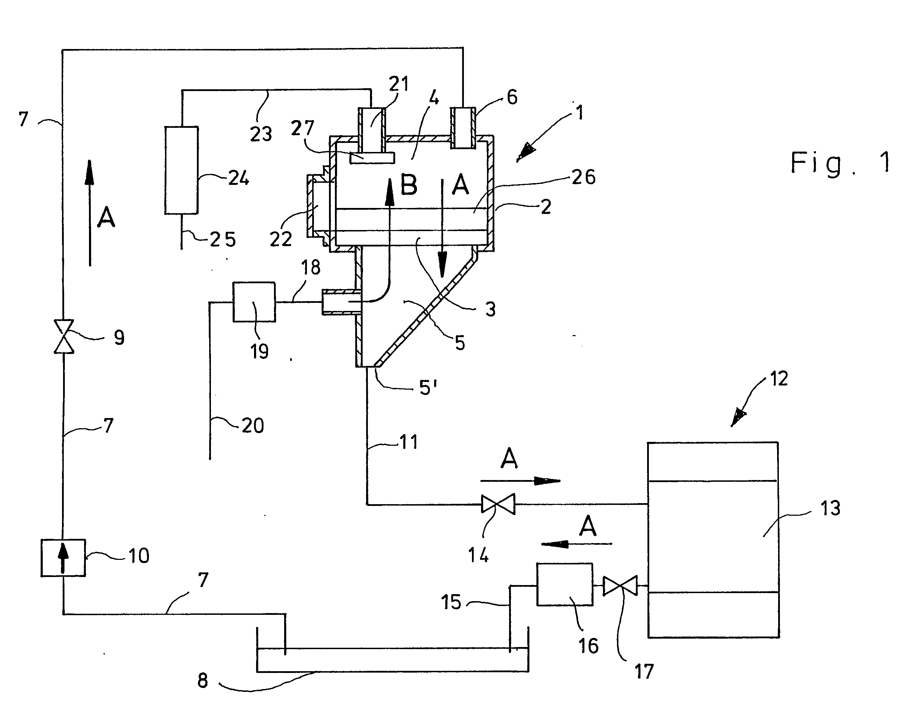

In der Figur 1 ist 1 eine Filtereinrichtung mit einem geschlossenen Gehäuse 2, dessen Innenraum durch ein Filter 3 in zwei Kammern, nämlich in die obere Kammer 4 und die untere Kammer 5 unterteilt ist. Der Filter 3 kann - auch in Anpassung an den jeweiligen Verwendungszweck, an die konstruktive Ausbildung der Filtereinrichtung 1 sowie der Gesamtanlage usw. - in unterschiedlichster Form ausgestaltet sein und aus dem unterschiedlichsten Material bzw. Material-Verbindungen bestehen, beispielsweise aus Filterpapier, aus Filtergewebe, aus Filtervlies usw., d.h. als Filter 3 sind grundsätzlich jedes Material oder jede Materialverbindung geeignet, das bzw. die aufgrund der vorhandenen Porosität einen Durchtritt des Lösungsmittels durch den Filter 3 gestattet und gleichzeitig ein ausreichendes Abscheiden von Fremdstoffen aus dem Lösungsmittel sicherstellt. Als Filter 3 sind in diesem Sinne u.a. körnige oder granulatartige Stoffe geeignet, die als Schützschicht auf eine vom Lösungsmittel durchströmten Unterlage den Filter 3 bilden. Weiterhin ist es nicht unbedingt erforderlich, daß der filter 3 eben ausgebildet ist, vielmehr können auch andere Formen bzw. Ausgestaltungen des Filters 3 zweckmäßig sein.

An der Kammer 4 weist die Filtereinrichtung 1 einen Lösungsmitteleinlaß 6 auf, der über eine Leitung 7 mit einem Vorratstank 8 für das Lösungsmittel verbunden ist. In der Leitung 7 sind ein Ventil 9 sowie eine Förderpumpe 10 vorgesehen.

Die unterhalb der Kammer 4 vorgesehene und sich zu ihrem unteren Ende trichterartig verengende Kammer 5 ist an ihrem unteren Ende bzw. Auslaß 5' über eine Leitung 11 an den Lösungsmitteleingang des im Teil 12 der Anlage vorgesehenen Behandlungsraumes 13 angeschlossen, in welchem die Behandlung der Gegenstände mit dem Lösungsmittel erfolgt und welcher bei einer Reinigungsanlage zum chemischen Reinigen von Gegenständen die bei solchen Anlagen übliche Behandlungs- bzw. Reinigungstrommel aufweist.

Bei der dargestellten Ausführungsform ist in der Leitung 11 ein weiteres Ventil 14 vorgesehen. Ein unterer Auslaß der Behandlungskammer 13 ist über eine Rücklaufleitung 15 mit dem Vorratstank 8 verbunden, wobei bei der dargestellten ausführungsform in dieser Rücklaufleitung 15 eine Filtereinrichtung 16 sowie ein Ventil 17 vorgesehen sind.

In die Kammer 5 mündet ein Kanal 18, der über ein Ventil 19 und einen am Eingang dieses Ventiles angeschlossenen Kanal 20 mit einer nicht näher dargestellten Quelle für Warmluft verbunden ist.

An der Kammer 4 weist die Filtereinrichtung 1 zwei Auslässe 21 und 22 auf, von denen der in der Figur 1 an der dem Filter 3 gegenüberliegenden Oberseite des Gehäuses 2 vorgesehene Auslaß 21 über einen Kanal bzw. eine Leitung 23 mit dem Eingang einer Kühleinrichtung 24 verbunden ist, deren Ausgang an einen Kanal bzw. an eine Leitung 25 angeschlossen ist. Der in der Figur 1 an der vertikalen Umfangswand des Gehäuses 2 in der Nähe des Filters 3 vorgesehene Auslaß 22 ist im einfachsten Fall eine zum Reinigen der Filtereinrichtung 1 dienende und durch eine Klappe usw. verschlossene Öffnung.

Für die Behandlung der Gegenstände im Behandlungsraum 13 mit dem Lösungsmittel wird dieses bei eingeschalteter Förderpumpe 10 und geöffneten Ventilen 9 und 14 dem Behandlungsraum 13 über die Leitungen 7 und 11 zugeführt, wobei das Lösungsmittel die Leitungen 7 und 10, aber auch den Filter 3 in einer Richtung durchströmt, wie sie durch die Pfeile A angedeutet ist. Während der Behandlungsphase (z.B. beim Reinigen von Gegenständen) kann das Lösungsmittel selbstverständlich auch im Kreislauf gefördert werden, d.h. in diesem Fall ist dann auch das Ventil 17 geöffnet, so daß dan ständig auch Lösungsmittel aus dem Behandlungsraum 13 an den Vorratstank 8 zurückfließt.

Im Lösungsmittel vorhandene Fremdstoffe, die hauptsächlich von der Behandlung der Gegenstände mit diesem Lösungsmittel herrühren, scheiden sich u. a. in der Filtereinrichtung 1 auf der der Kammer 4 zugewandten Seite des Filters 3 als Filterkuchen 26 ab, wobei nicht nur der Filter 3, sondern auch der Filterkuchen 26 nach Abschluß der Behandlungsphase mit dem Lösungsmittel getränkt sind, d.h. dort Lösungsmittelrückstände vorhanden sind. Insbesondere dann, wenn die Filtereinrichtung 1 gereinigt werden muß, d.h. ein Ausbringen der den Filterkuchen 26 bildenden Fremdstoffe bzw. eine Erneuerung des Filters 3 erforderlich ist, ist es schon aus Gründen des Umweltschutzes erforderlich, die im Filterkuchen 26 bzw. im Filter 3 vorhandenen Lösungsmittelrückstände zu entfernen. Hierfür wird dann bei abgeschalteter Förderpumpe 10 und gesperrten Ventilen 9 und 14 die Kammer 5 über das geöffnete Ventil 19 und den Kanal 18 mit Warm- oder Heißluft beaufschlagt, die entsprechend dem Pfeil 8 den Filter 3 und den Filterkuchen 26 von unten nach oben, d.h. in einer der Flußrichtung des Lösungsmittels (A) entgegengesetzten Richtung durchströmt, die Lösungsmittelrückstände im Filter 3 sowie im Filterkuchen 26 verdampft und in dieser Dampfphase über den Auslaß 21 an die Kühleinrichtung 24 fördert. In der Kühleinrichtung werden die Lösungsmittelrückstände wieder kondensiert, so daß sie dann als Kondensat bzw. in flüssiger Form entweder direkt an den Vorratstank 8 oder über den Behandlungsraum 13 an diesen Vorratstank 8 zurückgeführt werden können. Dadurch, daß die Warmluft den filter 3 sowie den Filterkuchen 26 in einer der Flußrichtung des Lösungsmittels entgegengesetzten Richtung durchströmt, wird der Filterkuchen 26 aufgelockert und evtl. durch Fremdstoffe verstopfte oder zugelegte Poren bzw. Kanäle des Filters 3 werden geöffnet, so daß ein sehr intensives Durchströmen des Filters 3 und vor allem auch des Filterkuchens 26 gewährleistet ist, so daß sämtliche im Filter 3 sowie im Filterkuchen 26 vorhandenen Lösungsmittelrückstände verdampft werden. Nach dem Entfernen der Lösungsmittelrückstände kann der Warmluftstrom auch dazu verwendet werden, um die den Filterkuchen 26 bildenden Fremdstoffe auszutragen, zumindest kann der Warmluftstrom hierbei unterstützend mitwirken.

Um ein Mitführen von Fremdstoffen mit dem die Kammer 4 am Auslaß 21 verlassenden Warmluftsrom zu vermeiden, kann es zweckmäßig sein, an diesem Auslaß ein gröberes Filter oder Gitter 27 vorzusehen.

Weiterhin ist es möglich, die Filtereinrichtung 16 in gleicher Weise wie die Filtereinrichtung 1 auszugestalten, wobei dann die Kammer 4 mit dem Lösungsmitteleinlaß 6 an den Behandlungsraum 13 und die Kammer 5 mit dem Auslaß 5' an die Rücklaufleitung 15 angeschlossen sind.

Abweichend von der dargestellten Ausführungsform kann das heiße gasförmige Medium der Kammer 5 auch über den Auslaß 5' zugeführt werden. Grundsätzlich ist es weiterhin auch möglich, zum Abführen des heißen gasförmigen Mediums anstelle des Auslasses 21 den Lösungsmitteleinlaß 6 zu verwenden, wobei der Lösungsmitteleinlaß 6 dann über eine Steuerventileinrichtung wahlweise an die Leitung 7 oder 23 anschließbar ist.

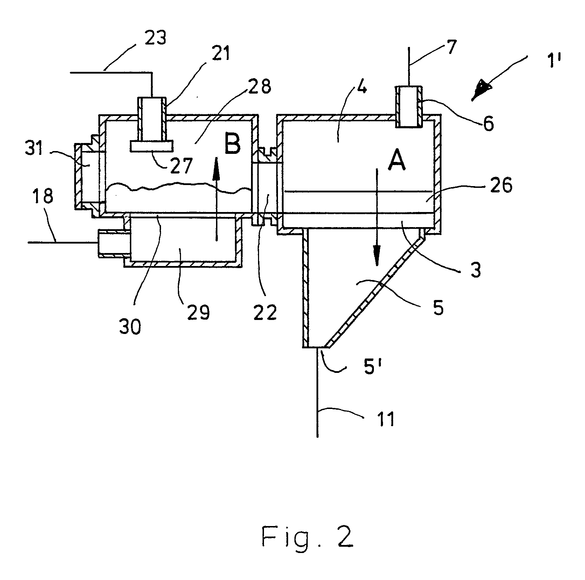

In der Figur 2 ist eine weitere Ausführungsform der erfindungsgemäßen Filtereinrichtung dargestellt. Diese Filtereinrichtung 1' besitzt insgesamt vier Kammern, nämlich die beiden durch den Filter 3 voneinander getrennten Kammern 4 und 5 mit dem jeweiligen Lösungsmitteleinlaß 6 und Auslaß 5' entsprechend der Filtereinrichtung 1, sowie zwei weitere, übereinander sowie seitlich von den Kammern 4 und 5 angeordnete Kammern 28 und 29, die durch ein gitter- oder siebartiges Element 30 voneinander getrennt sind. Die obere Kammer 28 ist an den verschließbaren Auslaß 22 der Kammer 4 angeschlossen. Weiterhin besitzt die obere Kammer 28 den oberen Auslaß 21, während in die untere Kammer 29 der Kanal 18 mündet.

Bei dieser Ausführungsform, bei der wiederum der Lösungsmitteleinlaß 6 an die Leitung 7 und der Auslaß 5' an die Leitung 11 angeschlossen sind, erfolgt das Entfernen der Lösungsmittelrückstände aus den aus dem Lösungsmittel ausgefilterten Fremdstoffen bzw. aus dem Filterkuchen 26 dadurch, daß dieser im feuchten Zustand, d.h. in seinem mit den Lösungsmittelresten getränkten Zustand (nach dem Öffnen des Auslasses 22) in die Kammer 28 auf das dortige sieb- oder gitterartige Element 30 eingebracht wird, und zwar beispielsweise mit Hilfe einer nicht näher dargestellten Ausräumeinrichtung (z. B. Schieber usw.) oder auf andere geeignete Weise. Zum Verdampfen der Lösungsmittelrückstände wird dann nach dem Schließen des Auslasses 22 der unteren Kammer 29 über den Kanal 18 das heiße gasförmige Medium (z. B. Warmluft) zugeführt, welches in Richtung des Pfeiles B von unten nach oben das Element 30 sowie die auf diesem Element befindlichen, ausgefilterten Fremdstoffe durchströmt, dadurch in der bereits beschriebenen Weise die Lösungsmittelrückstände verdampft und in der Dampfform an die Kühleinrichtung 24 mitführt. Die Kammern 28 und 29 bilden somit eine zusätzlich zu der eigentlichen Filtervorrichtung vorgesehene Verdampfereinrichtung, wobei diese Ausführung den besonderen Vorteil hat, daß die Rückgewinnung der Lösungsmittelrückstände während des normalen Betriebes der Anlage erfolgen kann. Weiterhin hat selbstverständlich diese Ausführung, bei der die aus dem Lösungsmittel ausgefilterten Fremdstoffe in der Kammer 28 auch über eine größere Zeitperiode gesammelt werden können, ebenfalls den Vorteil, daß beim Reinigen der Filtereinrichtung, d. h. beim Ausbringen der von Lösungsmittelresten befreiten Fremdstoffe durch den verschließbaren Auslaß 31 der Kammer 28 nur Stoffe gehandhabt werden müssen, die praktisch keine Lösungsmittelrückstände mehr aufweisen. Da bei der Ausführung nach Fig. 2 das heiße gasförmige Medium das Element 30 von unten nach oben durchströmt, d.h. an der den Fremdstoffen abgewandten Seite in das Element eintritt, wird auch hier wiederum eine Auflockerung der Fremdstoffe auf dem Element 30 und eine innige, gleichmäßige Durchströmung der gesamten Fremdstoffe erreicht, und zwar in gleicher Weise wie dies oben bei der Ausführung nach Fig. 1 in bezug auf den Filterkuchen 26 beschrieben wurde.

Die Filtereinrichtung 1' kann weiterhin auch so ausgebildet sein, daß das Einbringen der den Filterkuchen 26 bildenden Fremdstoffe aus der Kammer 4 in die Kammer 28 dadurch erfolgt, daß der Filter 3 zusammen mit dem Filterkuchen 26 in die von den Kammern 28 und 29 gebildete Verdampfereinrichtung überführt wird, wobei in diesem Fall dann der den Filterkuchen 26 aufweisende Filter 3 die Funktion des Elementes 30 übernimmt, d.h. auf dieses Element 30 verzichtet werden kann und gleichzeitig mit dem Entfernen des Filters 3 aus der von den Kammern 4 und 5 gebildeten eigentlichen Filtervorrichtung in diese, d.h. zwischen den Kammern 4 und 5 eine neuer, frischer Filter eingesetzt wird. Insbesondere dann, wenn die Filter 3 mehrmals verwendbar sind, besteht auch die Möglichkeit, eine entsprechende Transporteinrichtung vorzusehen, an der wenigstens zwei Filter 3 vorgesehen sind, die dann jeweils aus dem Bereich der Kammern 4 und 5 in den Bereich der Kammern 28 und 29 sowie aus dem Bereich der Kammern 28 und 29 zurück in den Bereich der Kammern 4 und 5 bewegbar sind.

Grundsätzlich ist es weiterhin auch möglich, die Verdampfereinrichtung zum Verdampfen der Lösungsmittelrückstände auf andere Weise als beschrieben auszubilden und zu betreiben.

So kann es bei der Ausführung nach Fig. 2 zweckmäßig sein, bei vom Ausräumvorgang her vorliegender Auflockerung der Fremdstoffe das gasförmige Medium über die Leitung 23 zuzuführen und über den Kanal 18 das das Lösungsmittel enthaltende gasförmige Medium abzuführen. Dabei ersetzt das gitter- oder siebartige Element 30 die Mittel 27.

Bei der Ausführung nach Fig. 2 ist es nach weiterer Ausgestaltung der Erfindung sinnvoll, vor dem Ausräumen den Filterkuchen auf der dem Filter 3 zugewandten Seite kurzzeitig anzutrocknen, damit er sich problemlos vom Filter 3 löst, sofern er im nassen oder feuchten Zustand klebrig ist. Für dieses Antrocknen sind die Kammern 4, 5 in der in Fig. 1 dargestellten Ausstattung zu verwenden, damit zum Antrocknen das heiße gasförmige Medium von unten zugeführt und nach Durchleitung durch den Kuchen von oben abgeführt werden kann.

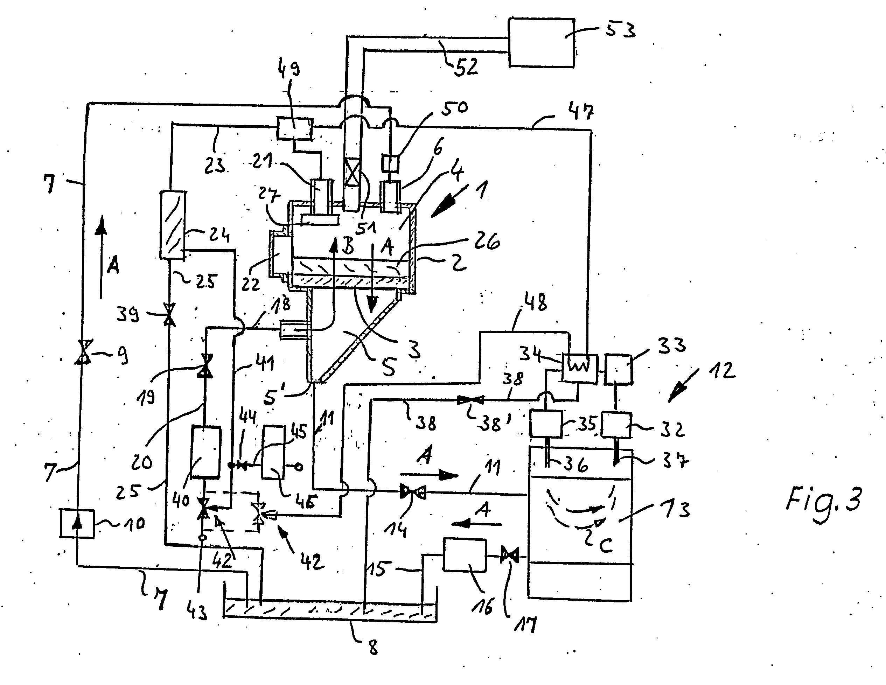

In der Fig. 3 sind die oben im Zusammenhang mit der Fig. 1 bereits beschriebenen Elemente nochmals wiedergegeben, und zwar in einer Darstellung, die in etwas detaillierterer Form im wesentlichen zwei mögliche Ausführungen für den Strömungsweg des heißen gasförmigen Mediums zum Rückgewinnen der Lösungsmittelrückstände aus dem Filter 3 sowie auch die zum Ableiten des rückgewonnenen Lösungsmittels in den Vorratstank 8 notwendigen Elemente zeigt.

In der Fig. 3 sind zunächst im Teil 12 der Reinigungsanlage über dem Behandlungsraum 13 ein Flusenfilter 32, eine beispielsweise von einem Ventilator oder einem Gebläse gebildete Luftfördereinrichtung 33, ein Luftkühler 34 sowie ein Lufterhitzer 35 vorgesehen. Diese, vorgenannten Elemente bilden einen an die Behandlungskammer 13 angeschlossenen Warmluftkreislauf, der bei allen chemischen Reinigungsanlagen bzw. -Maschinen üblich ist und dazu dient, um nach dem Behandeln bzw. Reinigen der im Behandlungsraum 13 bzw. in einer dortigen Trommel untergebrachten Gegenstände sowie nach dem Schleudern dieser Gegenstände doch noch vorhandene Lösungsmittelreste durch die Warmluft des Warmluftkreislaufes zu verdampfen und dadurch aus den Gegenständen zu entfernen. Hierfür wird der Behandlungskammer 13 über einen Warmlufteingang 36 des Warmluftkreislaufes vom Lufterhitzer 35 erwärmte Luft zugeführt, die dann die Behandlungskammer 13 durchströmt, wie dies mit den Pfeilen C angedeutet ist, und an einem Warmluftausgang 37 des Warmluftkreislaufes die Behandlungskammer 13 wieder verläßt. Von dem Warmluftausgang 37 gelangt dann die mit verdampftem Lösungsmittel beaufschlagte warme Luft über das Flusenfilter 32 und über den sich an dieses Flusenfilter anschließenden Luftförderer 33, der die Zirkulation der Luft im Warmluftkreislauf bewirkt, an den Luftkühler 34. In diesem Luftkühler 34 wird das von der warmen Luft mitgeführte, verdampfte Lösungsmittel kondensiert und das kondensierte Lösungsmittel wird über eine vorzugsweise mit einem Ventil 38' versehen Leitung 38 (bei geöffnetem Ventil 38') an den Vorratstank 8 abgeleitet. Am Ausgang des Luftkühlers 34 steht dann von Lösungsmittel weitestgehend gereinigte Luft zur Verfügung, die dem sich an den Luftkühler 34 anschließenden Lufterhitzer 35 zugeführt wird und über diesen erneut der Behandlungskammer 13 zufließen kann.

Völlig unabhängig von diesem Warmluftkreislauf, der für das Reinigen der Gegenstände in der Reinigungsmaschine notwendig ist, sind die nachfolgend beschriebenen Maßnahmen zu sehen, mit denen nach Beendigung jedes Reinigungsvorganges oder aber nach mehreren, abgeschlossenen Reinigungsvorgängen Lösungsmittelrückstände aus dem Filter 3 bzw. aus dem Filterkuchen 26 rückgewonnen werden.

Bei einer in der Fig. 3 wiedergegebenen Ausführung ist zur Rückgewinnung der Lösungsmittelrückstände im Filter 3 sowie im Filterkuchen 26 ein Heißluft- bzw. Verdampfungskreislauf vorgesehen, der zusätzlich zu den im Zusammenhang mit der Fig. 1 bereits beschriebenen Leitungen 18, 20, 23 und 25 sowie zusätzlich zu dem Ventil 19 zwischen den Leitungen 18 und 20 und zusätzlich zu der Kühleinrichtung 24 zwischen den Leitungen 23 und 25 noch folgende Elemente aufweist:

Ein Ventil 39 in der bis zum Vorratstank 8 führenden Leitung 25;
ein mit seinem Ausgang an die Leitung 20 angeschlossenes Heißluftgebläse 40 sowie
eine Leitung 41 für Luft, die (Leitung) mit ihrem einen Ende an die Kühleinrichtung 24 und mit ihrem anderen Ende am einen Eingang eines Drei-Wege-Ventiles 42 angeschlossen ist. Der andere Eingang 43 dieses Drei-Wege-Ventils 42 führt sur Atmosphäre und der Ausgang dieses Drei-Wege-Ventils 42 ist mit dem Eingang des Heißluftgebläses 40 verbunden.

Zum Entfernen von Lösungsmittelrückständen aus dem Filter 3 sowie aus dem Filterkuchen 26 wird durch Schließen der Ventile 9 und 14 die Filtereinrichtung 1 von dem Lösungsmittelkreislauf getrennt und durch Öffnen der Ventile 9, 10 und 39 sowie durch entsprechende Einstellung des Drei-Wege-Ventils 42 der Eingang des Heißluftgebläses 40 mit der Leitung 41 verbunden. Nach dem Einschalten des Heißluftgebläses 40 gelangt dann heiße Luft in die Kammer 5 und durchströmt von dort entsprechend dem Pfeil B den Filter 3 sowie den Filterkuchen 26. Die mit der heißen Lut mitgeführten, verdampften Lösungsmittelrückstände werden dann in der Kühleinrichtung 24 kondensiert und können über die Leitung 25 in den Vorratstank 8 zurückfließen. Die Luft gelangt über die Leitung 41 und das Drei-Wege-Ventil 42 an den Eingang des Heißluftgebläses 40 und kann dann von dort nach erneutem Erhitzen der Kammer 5 wieder zugeführt werden. Am Ende dieser Behandlung, bei der der Heißluftstrom über eine vorgegebene Zeitdauer in der beschriebenen Weise im Heißluftstromkreis zirkuliert, erfolgt zweckmäßigerweise noch eine Beaufschlagung des Filters 3 sowie des Filterkuchens 26 mit erhitzter Frischluft. Hierzu wird das Drei-Wege-Ventil 42 so betätigt, daß dessen mit der Leitung 41 verbundene Eingang geschlossen und der zur Atmosphäre hin führenden Eingang 43 geöffnet ist. Weiterhin wird ein Ventil 44 in einer von der Leitung 41 abzweigenden Leitung 45 geöffnet, die (Leitung) zu einem Adsorber 46 führt, der einen Ausgang zur Atmosphäre aufweist. Das Heißluftgebläse 40 saugt dann über den Eingang 43 Umgebungsluft an, die dann als Heißluft den Filter 3 sowie den Filterkuchen 26 entsprechend dem Pfeil B durchströmt, in der Kühleinrichtung 24 von verdampften Lösungsmittelrückständen weitestgehend befreit und über den Adsorber 46 in die Umgebung austritt, wobei letzterer noch vorhandene, verdampfte Lösungsmittelrückstände und andere Stoffe, die nicht in die Atmosphäre geleitet werden sollen, zurückhält.

Alternativ oder zusätzlich zu dem vorbeschriebenen Verdampfungs- bzw. Heißluftstromkreis kann ein Heißluftstromkreis vorgesehen sein, der folgende Elemente aufweist:

Eine Leitung 47, die mit dem einen Ende an den Auslaß 21 und mit dem anderen Ende an den Kühler 34 des Warmluftkreislaufes angeschlossen ist sowie.

eine Leitung 48, die mit einem Ende an einen Ausgang des Luftkühlers 34 und mit ihrem anderen Ende an den einen Eingang des Drei-Wege-Ventils 42 angeschlossen ist, welcher (Eingang) bei der vorbeschriebenen Ausführung mit der Leitung 41 verbunden ist.

Das Drei-Wege-Ventil 42 ist für diese zweite Ausführung des Heißluftstromkreises in der Fig. 3 mit unterbrochenen Linien angedeutet. Die Arbeitsweise dieser zweiten, möglichen Ausführung des Heißluftstromkreises ist im Prinzip gleich der vorbeschriebenen Arbeitsweise der ersten Ausführung, lediglich mit dem Unterschied, daß der Luftkühler 34 anstelle der Kühleinrichtung 24 zum Abscheiden der mit der Heißluft mitgeführten verdampften Lösungsmittelrückstände dient, die dann über die Leitung 38 an den Vorratstank 8 geleitet werden. Auch bei dieser zweiten Ausführung ist eine Nachbehandlung mit Umgebungs- bzw. Frischluft möglich, wobei in diesem Fall dann wiederum der Eingang 43 des Drei-Wege-Ventils 42 zur Atmosphäre hin geöffnet ist und die Leitung 48 mit einem dem Adsorber 46 entsprechenden, zur Atmosphäre hin führenden Adsorber in Verbindung steht. Die Leitungen 23, 25, 41 sowie die Kühleinrichtung 24 und der an diese Kühleinrichtung angeschlossene Adsorber 46 werden bei dieser zweiten Ausführung des Heißluftstromkreises nicht benötigt.

Grundsätzlich ist es aber auch möglich, beide vorbeschriebenen Heißluftstromkreise nebeneinander vorzusehen, wobei dann zweckmäßigerweise am Auslaß 21 ein Drei-Wege-Ventil oder eine entsprechende Ventilanordnung 49 vorgesehen sind, mit denen dieser Auslaß 21 wahlweise mit der Leitung 23 bzw. der Leitung 47 verbunden werden kann.

Da die Heißluft den Filter 3 sowie den Filterkuchen 26 in Richtung des Pfeiles B durchströmt, wird in der vorbeschriebene Weise durch diese Heißluft beim Verdampfen von Lösungsmittelrückständen gleichzeitig auch eine Auflockerung des Filterkuchens 26 erreicht, auf jeden Fall aber verhindert, daß der Heißluftstrom den Filterkuchen 26 so verdichtet bzw. den Filter 3 so zusetzt, daß eine ausreichende, gleichmäßige Durchströmung des Filters 3 sowie des Filterkuchens 26 nicht mehr möglich ist, was insbes. dann von Bedeutung ist, wenn der Filterkuchen 26 auch klebrige und schlammartige Bestandteile aufweist. Das Durchströmen des Filters 3 sowie des Filterkuchens 26 in Richtung des Pfeiles B entgegen der Strömungsrichtung A des Flüssigkeitskreislaufs hat aber auch den Vorteil, daß der von dem Gebläse 40 erzeugte Luftstrom gleichzeitig zum Austragen der den Filterkuchen 26 bildenden Fremdstoffe aus der Kammer 4 dienen kann. Bei dieser möglichen Ausführung ist zusätzlich zu der Ventileinrichtung 49 oder einem anderen entsprechenden Ventil am Auslaß 21 auch am Lösungsmitteleinlaß 6 eine Ventileinrichtung 50 vorgesehen. Außerdem ist ein in die obere Kammer 4 mit einem Ende mündender und durch eine Verschließeinrichtung 51 verschließbarer Kanal 52 vorgesehen, an dessen anderes Ende ein Auffangelement 53 (z.B. Filterbeutel oder Filtersack) angeschlossen ist. Das Verschließelement 51 ist im einfachsten Fall von einer Klappe oder einem Schieber gebildet, die bzw. der normalerweise geschlossen ist und nur für das Entfernen der den jeweiligen Filterkuchen 26 bildenden Fremdstoffe geöffnet wird. Bei geöffnetem Verschließelement 51 und geschlossenen Ventileinrichtungen 49 und 50 können dann von einem mit dem Heißluftgebläse 40 über den geöffneten Eingang 43 angesaugten Luftstrom die den **Filterkuchen 26** bildenden Fremdstoffe vom Filter 3 gelöst und mit diesem Luftstrom durch den Kanal 52 in das Auffangelement 53 gefördert werden. Das Heißluftgebläse 40 ist für diesen Zweck vorzugsweise so ausgebildet, daß beim Ausblasen der den Filterkuchen 26 bildenden Fremdstoffe die Heizeinrichtung dieses Heißluftgebläses 40 abgeschaltet ist und das Heißluftgebläse vorzugsweise eine erhöhte Luft-Förderleistung aufweist. Grundsätzlich ist es auch möglich, daß das Auffangelement 53 Bestandteil einer Absaugeinrichtung ist, deren Wirkung dann durch das in der vorbeschriebenen Weise arbeitende Heißluftgebläse 40 unterstützt wird. Damit das Eintreten der den Filterkuchen 26 bildenden vom Filter 3 abgelösten, trockenen Fremdstoffe in den Kanal 52 erleichtert wird, ist es zweckmäßig, die dem Filter 3 gegenüberstehende Wandung des Gehäuses 2 von der Ausmündung des Kanals 52 beginnend trichterförmig auszubilden.

**Ansprüche**

1. Verfahren zum Reinigen von Lösungsmitteln durch Filtration, bei dem zum Ausfiltern von Fremdstoffen aus dem Lösungsmittel dieses wenigstens ein in einer Filtereinrichtung vorgesehenes Filter in einer ersten Strömungsrichtung durchströmt, wobei sich die Fremdstoffe aus dem Lösungsmittel auf einer in der ersten Strömungsrichtung vorderen Seite des Filters niederschlagen und dort einen Filterkuchen bilden, und bei dem zumindest vor dem Austrag der den Filterkuchen bildenden Fremdstoffe aus der Filtereinrichtung im Filterkuchen sowie evtl. auch im Filter vorhandene Lösungsmittelrückstände durch Destillation zurückgewonnen werden, bei welcher in der Filtereinrichtung die Lösungsmittelrückstände durch Beaufschlagung mit einem der Filtereinrichtung zugeführten, heißen gasförmigen Medium, vorzugweise mit Heiß- oder Warmluft verdampft werden, dadurch gekennzeichnet, daß das gasförmige Medium den Filter und/oder den Filterkuchen bzw. die diesen bildenden Fremdstoffe in einer zweiten, der ersten entgegengesetzten Strömungsrichtung durchströmt.

2. Verfahren nach Anspruch 1, dadurch gekennzeichnet, daß das gasförmige Medium den Filter und/oder den Filterkuchen bzw. die diesen bildenden Fremdstoffe von unten nach oben durchströmt.

3. Verfahren nach Anspruch 1 oder 2, dadurch gekennzeichnet, daß die den Filterkuchen bildenden Fremdstoffe vor dem Verdampfen der Lösungsmittelrückstände in einen eine Verdampfervorrichtung bildenden Teil der Filtereinrichtung eingebracht bzw. überführt werden und dort die Beaufschlagung mit dem heißen gasförmigen Medium erfolgt.

4. Filtereinrichtung zum Durchführen des Verfahrens nach einem der Ansprüche 1 bis 3, mit wenigstens einer ersten und einer zweiten, in einem Gehäuse gebildeten und durch wenigstens ein Filter voneinander getrennten Kammern, von denen die erste Kammer zum Zuführen des zu reinigenden Lösungsmittels und die zweite Kammer zum Abführen des gereinigten Lösungsmittels dienen, wobei das Lösungsmittel den Filter durchströmt und im Lösungsmittel vorhandene Fremdstoffe als Filterkuchen auf der der ersten Kammer zugewendeten Seite des Filters abgeschieden werden, wobei die Filtereinrichtung zum Verdampfen der Lösungsmittelrückstände einen mit einer Quelle für ein heißes gasförmiges Medium, vorzugsweise für Warm- oder Heißluft verbindbaren Einlaß sowie einen Auslaß zum Abführen dieses Mediums aufweist, dadurch gekennzeichnet, daß der Einlaß (18, 5′) für das gasförmige Medium an der zweiten Kammer (5) und der Auslaß (6, 21) für das gasförmige Medium an der ersten Kammer (4) vorgesehen sind.

5. Vorrichtung nach Anspruch 4, dadurch gekennzeichnet, daß der Einlaß für das gasförmige Medium von einem Anschluß an die zweite Kammer (5) gebildet ist, der zum Abführen des gereinigten Lösungsmittels dient, oder daß der Einlaß (18) für das gasförmige Medium an der zweiten Kammer zusätzlich zu einem Lösungsmittelauslaß (5') vorgesehen ist.

6. Filtereinrichtung nach Anspruch 4 oder 5, dadurch gekennzeichnet, daß der Auslaß für das gasförmige Medium von einem Anschluß der ersten Kammer (4) gebildet ist, der zum Zuführen des zu reinigenden Lösungsmittels dient, oder daß der Auslaß (21) für das gasförmige Medium an der ersten Kammer (4) zusätzlich zu einem Lösungsmitteleinlaß (6) vorgesehen ist.

7. Filtereinrichtung nach Anspruch 4, dadurch gekennzeichnet, daß zusätzlich zu der ersten und zweiten Kammer (4, 5) eine von wenigstens einer weiteren Kammer (28, 29) gebildete Verdampfereinrichtung vorgesehen ist, die den Einlaß (18) sowie den Auslaß (21) für das gasförmige Medium aufweist, wobei vorzugsweise die wenigstens eine weitere Kammer (28) der Verdampfungseinrichtung über einen verschließbaren Kanal (22) mit der ersten Kammer (4) in Verbindung steht.

8. Filtereinrichtung nach Anspruch 7, dadurch gekennzeichnet, daß die Verdampfereinrichtung von wenigstens zwei Kammern, nämlich von einer dritten und einer vierten Kammer (28, 29) gebildet ist, die durch ein als Auflagefläche für die Fremdstoffe dienendes und Öffnungen oder Kanäle für einen Luft- oder Gasdurchtritt aufweisendes Element (30) voneinander getrennt sind, und daß die dritte Kammer (28) den Auslaß (21) für das gasförmige Medium und die vierte Kammer den Einlaß (18) für das gasförmige Medium aufweisen, wobei vorzugsweise die der dritten Kammer (28) zugewandte Seite des Elementes (30) als Auflagefläche für die Fremdstoffe dient.

9. Filtereinrichtung nach einem der Ansprüche 4 bis 8, dadurch gekennzeichnet, daß am Auslaß (21) für das gasförmige Medium ein Filter oder Gitter (27) vorgesehen ist.

10. Filtereinrichtung nach einem der Ansprüche 4 bis 9, zur Verwendung bei einer Reinigungsanlage zum chemischen Reinigen von Gegenständen, wobei die Reinigungsanlage einen Behandlungsraum für die Gegenstände, einen an den Behandlungsraum anschließbaren, die Filtereinrichtung einschließenden Lösungsmittelkreislauf sowie einen an den Behandlungsraum anschließbaren Warmluftkreislauf zum Entfernen von Lösungsmittelrückständen aus den Gegenständen nach ihrer Behandlung aufweist, und wobei der Warmluftkreislauf eine Luftfördereinrichtung, einen Luftkühler sowie einen Lufterhitzer besitzt, dadurch gekennzeichnet, daß die Quelle für das heiße gasförmige Medium von einem von dem Lufterhitzer (35) des Warmluftkreislaufes unabhängigen Heißluftgebläse (40) gebildet ist.

11. Filtereinrichtung nach Anspruch 10, dadurch gekennzeichnet, daß das Heißluftgebläse (40) Teil eines gesonderten, eine Kühleinrichtung (24, 34) einschließenden Heißluft- oder Verdampferkreislaufes ist.

12. Filtereinrichtung nach Anspruch 11, dadurch gekennzeichnet, daß die Kühleinrichtung der Luftkühler (34) des Warmluftkreislaufes ist, der (Luftkühler) mit seinem Eingang und Ausgang unmittelbar an den Verdampferkreislauf angeschlossen ist.

13. Filtereinrichtung nach Anspruch 11, dadurch gekennzeichnet, daß die Kühleinrichtung (24) zusätzlich zu dem Luftkühler (34) des Warmluftkreislaufes vorgesehen ist.

14. Filtereinrichtung nach einem der Ansprüche 4 bis 13, dadurch gekennzeichnet, daß an der ersten oder dritten Kammer (4, 28) ein Auslaß (22, 31, 52) zum Ausbringen der Fremdstoffe bzw. des Filterkuchens (26) vorgesehen ist.

15. Filtereinrichtung nach Anspruch 14, dadurch gekennzeichnet, daß der Auslaß (22) zum Ausbringen der Fremdstoffe bzw. des Filterkuchens (26) an der ersten Kammer (1) in der Nähe des Filters (3) vorgesehen ist.

16. Filtereinrichtung nach Anspruch 14 oder 15, dadurch gekennzeichnet, daß der Auslaß für die Fremdstoffe von einem mit einem Ende an die erste oder dritte Kammer (4, 28) angeschlossenen, verschließbaren Kanal gebildet ist, der mit seinem anderen Ende in ein Auffangelement (53), z.B. Filterbeutel für die Fremdstoffe mündet.

Fig. 1

Fig. 2

Fig.3